# EUROPEAN PATENT SPECIFICATION

(11) **EP 1 832 767 B1**
(45) Date of publication and mention of the grant of the patent: **17.10.2012**
(21) Application number: 05805847.0
(22) Date of filing: 10.11.2005
(51) Int. Cl.: F16C 33/46

(54) **CAGE FOR ROLLER BEARING**
KÄFIG FÜR ROLLENLAGER
CAGE POUR PALIER A ROULEAUX

(30) Priority: 10.11.2004 JP 2004326254
(43) Date of publication of application: 12.09.2007
(73) Proprietor: JTEKT Corporation, Osaka-shi Osaka 542-8502 (JP)
(72) Inventor: HAYASHI, Atsunori c/o JTEKT CORPORATION, Osaka 542-8502 (JP); ATSUMI, Toshiyuki c/o JTEKT CORPORATION, Osaka 542-8502 (JP)
(74) Representative: Weber, Joachim
(86) International application number: PCT/JP2005/020608
(87) International publication number: WO 2006/051857

(56) References cited:
- DE-B- 1 113 613
- DE-C- 858 912
- DE-C- 934 373
- GB-A- 1 355 569
- JP-A- 11 325 081
- JP-U- 55 028 192
- JP-U- 58 109 627
- JP-Y1- 43 023 448
- JP-Y1- 44 007 448

## Description

### Technical Field

The present invention relates to a cage for roller bearing.

### Background Art

For a cage for a roller bearing, there is a cage that has roller stopping claws formed on a radially outer edge and/or a radially inner edge of inner surfaces of pillar portions defining pockets by machining (plastic deformation), such as caulking, to retain rollers (see Patent literature 1). However, forming roller retaining structure such as stopping claws in the cage causes the cage to be complicated in structure and difficult in machining and in turn considerably increases manufacturing cost. In particular, the above roller retaining structure significantly restrict the cage in design, such as selecting a guide type of cage, selecting a material for cage, determining the weight of cage.
Patent literature 2 provides a solution of an improved cage for rolling bearings. This cage comprises a base element and a plurality of separately formed roller retainers. These roller retainers are H-shaped and are clamped onto pocket providing webs of the base element.
Patent literature 1: JP-A-2000-192965
Patent literature 2: GB-1-355-569-A.

### DISCLOSURE OF THE INVENTION

Therefore, it is an object of the invention to improve flexibility in design of a cage by removing
retaining portions from design item of the cage. The invention is defined by the features of claim 1.

A cage for a roller bearing according to the invention includes a cage body having pockets that are formed by circumferentially adjacent pillar portions to retain rollers and a plurality of roller retainers that are individually formed from the cage body and mounted over the pillar portions. The roller retainer includes a locking portion that is locked on the outer surface of the pillar portion and two clamping portions that extend from both edges of the locking portion toward the inner side surfaces of the pillar portion, has a generally U-shaped cross section, and fixedly mounted over the pillar portion, with the clamping portions being formed convexly toward the pillar portion and elastically clamping the inner side surfaces of the pillar portion.

The locking portion and clamping portions are curved or bent, to give the cross section a substantially entirely U-shape. The convex shape includes a shape that the distance between both clamping portions is the least at the ends, other than the curved and bent shape. The roller bearing is applicable to any one of radial roller bearings and thrust roller bearings. Further, the clamped regions on both side surfaces of the pillar portions by the clamping portions may be parts or entire portions of the side surfaces in the width direction of the pillar portions. When the clamped regions are parts, guide grooves may be formed on the side surfaces of the pillar portions. Further, the invention is applicable to an inside guide-typed cage by inversing the roller retainers.

According to the invention, because the roller retainers, individually formed from the cage body, are mounted over the pillar portions, rollers can be retained in the cage body, so that it is not needed to form stopping claws in the pillar portions. As a result, as for the cage body, a material is considerably freely selected in consideration of strength and lightweight and design is considerably flexible. On the other hand, as for the roller retainers, a material is individually selected regardless of the cage body, so that the material is also significantly freely selected as a retaining means and the roller retainers can be shaped in consideration of improving the capacity of a bearing regardless of the cage body as well. Further, according to the invention, because the roller retainers are manufactured through a process different from the cage, they can be formed in a simple shape with high accuracy, while the pillar portions can be designed and manufactured regardless of forming stopping claws.

### Advantage of the Invention

According to the invention, roller retainers are mounted in a cage body form the outside, so that the cage can be designed without stopping claws and flexibility in the designs is considerably improved accordingly.

### BRIEF DESCRIPTION OF THE DRAWINGS

FIG. 1 is a partial perspective view of a cage for a radial roller bearing according to an embodiment of the invention.
FIG. 2 is a partial cross-sectional view of the cage of FIG. 1.
FIG. 3 is a view illustrating a process of mounting a roller retainer over a pillar portion of a cage body.
FIG. 4 is a view showing a modification for the roller retainer.
FIG. 5 is a partial perspective view of a cage for a thrust roller bearing according to another embodiment of the invention.
FIG. 6 is a partial cross-sectional view of the cage of FIG. 5.
FIG. 7 is a partial perspective view of a cage for a radial roller bearing according to another embodiment of the invention.

### BEST MODE FOR CARRYING OUT THE INVENTION

A cage for a roller bearing cage (hereinafter referred to as cage) according to an embodiment of the invention is described hereafter in detail with reference to accompanying drawings.

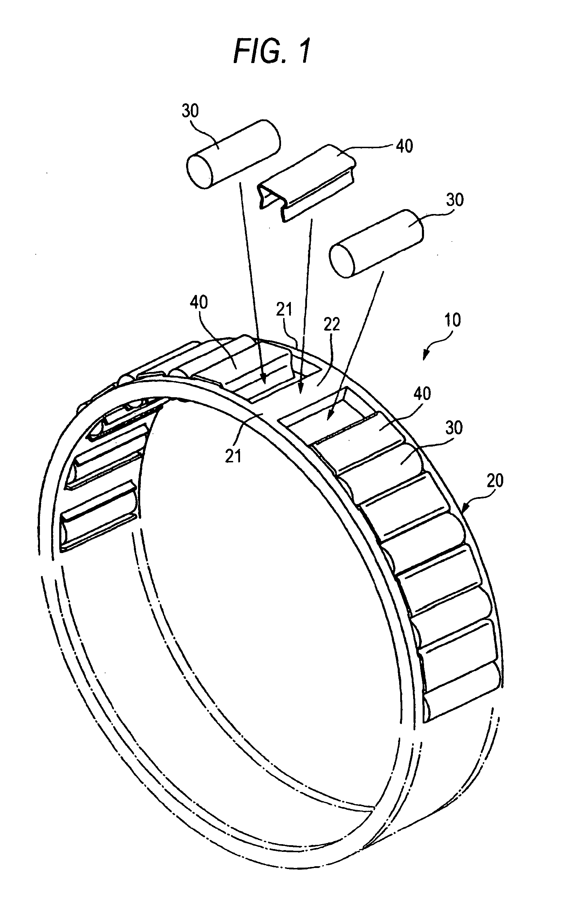

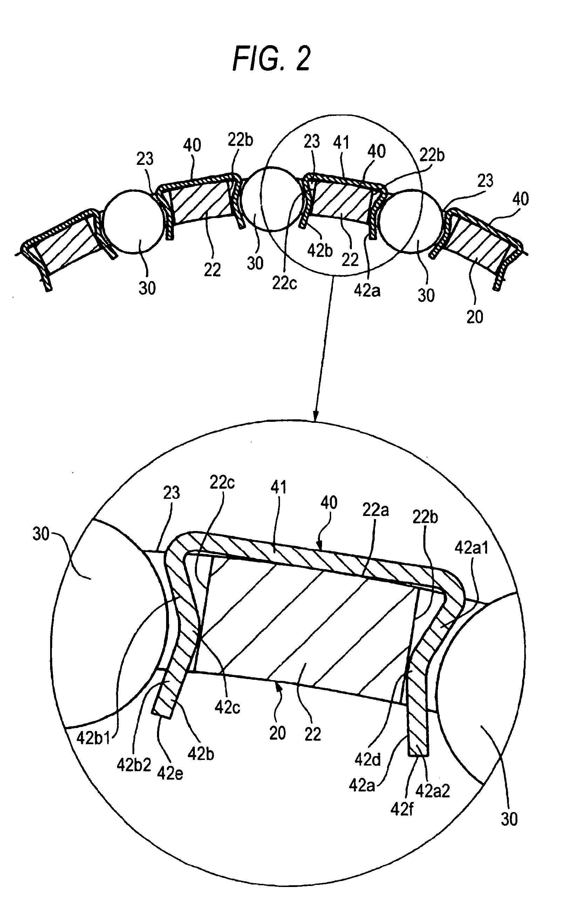

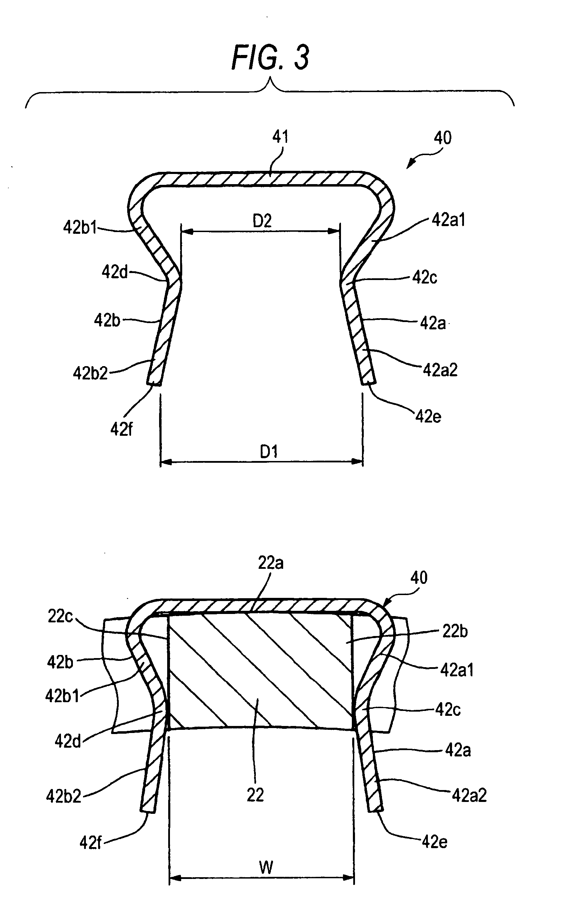

FIGS. 1 to 3 show a cage for a radial roller bearing according to an embodiment of the invention. FIG. 1 is a partial perspective view of the cage, FIG. 2 is a partial cross-sectional view of the cage of FIG. 1, and FIG. 3 is a view illustrating process of mounting a roller retainer over a pillar portion of a cage body.

Referring to FIGS. 1 and 2, a cage 10 according to the present embodiment includes a cage body 20 and a plurality of roller retainers 40. The cage body 20 includes a pair of annular rib portions 21 axially arranged, a plurality of pillar portions 22 circumferentially arranged between the rib portions 21, and pockets 23 which is arranged circumferentially and formed between two adjacent pillar portions 22. Rollers are inserted in and retained by the pockets 23, respectively, as described later.

The roller retainer 40 is an individual part from the cage body 20 and is mounted over the pillar portion 22. The roller retainer 40 is constituted by a locking portion 41 that has a rectangular plate shape slightly larger than the radially outer side shape of the pillar portion 22 and is locked at the radially outer surface of the pillar 22, and two clamping portions 42a, 42b that are bent from edge edges of the locking portion 41 and extend toward inner side surfaces of the pillar portion 22, thereby the roller retainer has a substantially U-shaped cross section. The clamping portions 42a, 42b are convex toward the sides of the pillar portion 22 and elastically clamp the pillar portion 22, while they are concave toward the pocket 23 and operable to retain the roller 30 to prevent the roller from falling out of the pocket 23 by fixing both sides of roller PCD. In detail, the clamping portion 42a is formed convex toward the pillar portion 22, that is, bent concavely toward the pocket 23 (having a "<" shaped cross section in FIG. 2) by an outer bending portion 42a1 that is bent from an edge of the locking portion 41 toward the pillar portion 22 (inside) and an inner bending portion 42a2 that is bent back toward the pocket 23 (the outside). The clamping portion 42b is formed convex toward the pillar portion 22, that is, bent concavely toward the pocket (having a ">" shaped cross section in FIG. 2) by an outer bending portion 42b1 that is bent from the other edge of the locking portion 41 toward the pillar portion 22 and an inner bending portion 42b2 that is bent back toward the pocket 23. Accordingly, the clamping portions 42a, 42b respectively have peaks 42c, 42d that contact with the side surfaces of the pillar portion 22 by the bending and bending back it.

Referring to FIG. 3, in the roller retainer 40 in a free state, the distance D1 between the ends 42e, 42f of the clamping portions 42a, 42b is larger than the width W of the pillar portion 22 and the distance D2 between the peaks 42c, 42d is smaller than the width W of the pillar portion 22. Therefore, when mounting the roller retainer 40 over the pillar portion 22, the ends 42e, 42f of the clamping portion 42a, 42b are directed to the pillar portion 22 and the roller retainer 40 is pushed toward the pillar portion 22 to a position where the locking portion 41 is locked at the outer surface 22a of the pillar portion 22. As a result, the peaks 42c, 42d of the clamping portions 42a, 42b are pushed to predetermined positions on both side surfaces 22b, 22c of the pillar portion 22, the distance between the peaks 42c, 42d after mounted is larger than the distance D1 before mounted, therefore they elastically clamps the side surfaces 22b, 22c of the pillar portion 22. Accordingly, the roller retainer 40 is mounted and fixed over the pillar portion 22.

With two roller retainers 40 fixedly mounted over the pillar portions 22 at both sides of a pocket 23, the roller 30 is retained by clamping the roller PCD with the bent surface (the surface defined by the outer bending portion 42b1 and the inner bending portion 42b2) concavely toward the pocket 23, provided at the clamping portion 42b of one of the roller retainers 40, and the bent surface (the surface defined by the outer bending portion 42a1 and the inner bending portion 42a2) concavely toward the pocket, provided at the clamping portion 42b of the other roller retainer 40. Accordingly, the roller 30 is prevented from radially falling outside or inside.

As a material for the roller retainer 40 having the above configuration, a steel plate such as a cold-rolled steel plate, a spring steel such as SUP, a non iron metal such as copper or aluminum, a resin such as a nylon 66, or similar materials to the above can be used. When the roller retainer 40 is formed of a steel plate, the surface of the roller retainer 40 may be coated with a solid lubricant, such as graphite, molybdenum disulfide, or soft metal. As described above in reference to the present embodiment, the rollers 30 can be prevented from falling out of the pocket 23 by mounting the roller retainers 40 over the pillar portions 22 and it is not needed to form stopping claws in the pillar portions 22 accordingly. For this reason, as for the cage body 20, it is not needed to form stopping claws in the pillar portions 22 and the design of the cage body 20 becomes considerably flexible. Further, the shape itself of the roller retainer 40 is not complicated and simple unlike to a stopping claw, so that the roller retainer 40 is manufactured with inexpensive cost as compared with the case that the pillar portions 22 is subjected to forming process. The roller retainer 40 is improved in oil film discontinues and contamination of lubricant oil by improving the roughness of surface thereof. Further, the roller retainer 40 can be manufactured with high accuracy through a process different from the cage 10, while the cage body 20 can also be manufactured in a simple shape without forming stopping claws at the pillar portion 22. Accordingly, the entire manufacturing cost and time are saved and the cage 10 with improved yield in manufacturing is provided.

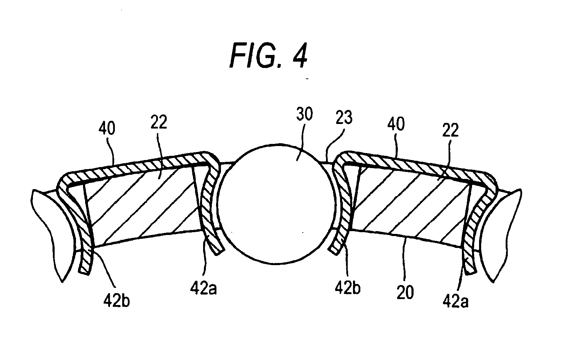

According to the invention, other than the above embodiment, for example as shown in FIG. 4, the clamping portions 42a, 42b of the roller retainer 40 may be generally curved concavely, and not bent. Further, a roller guide is basically employed for a guide type of the cage 10, but not limited thereto and may be a race guide type of inner and outer race.

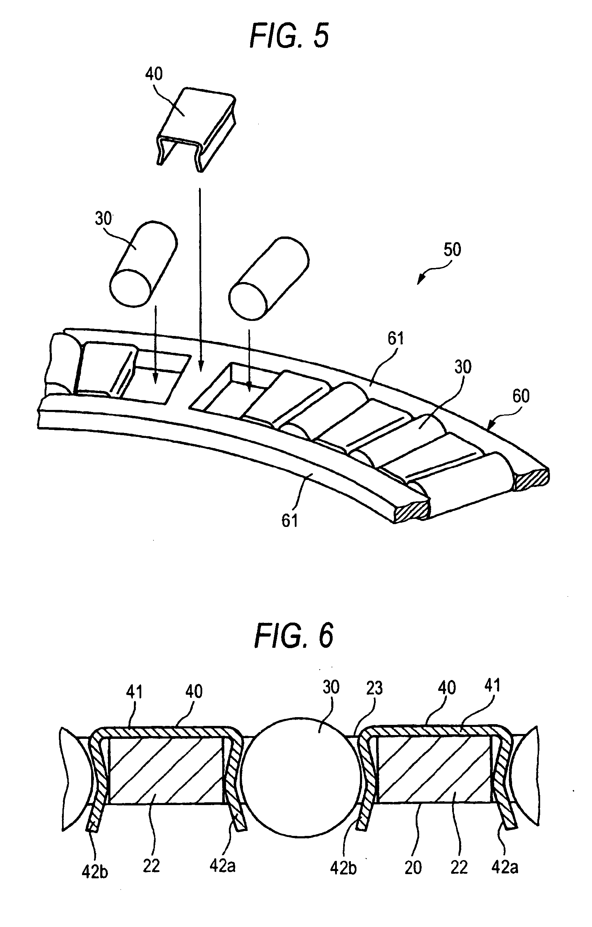

Further, as shown in FIGS. 5 and 6, the invention may be applied to a cage for a thrust roller bearing. FIG. 5 is a perspective partial view of the cage and FIG. 6 is a partial cross-sectional view of the cage. The cage 50 includes a cage body 60, a plurality of rollers 30, and a plurality of roller retainers 40. The cage body 60 has two annular rib portions 61 that are coaxially arranged radially inside and outside. The annular rib portions 61 face each other at a predetermined distance in the width direction of the cage (radially). Both ends of the pillar portions 22 are integrally connected to the annular rib portions 21 and arranged radially from the center of the cage at circumferentially even intervals. Pockets 23 are defined by spaces that are defined by the annular rib portions 61 and two pillar portions 22 circumferentially facing each other and formed in a rectangle with long sides in the width direction of the cage.

The roller retainers 40 are individual parts from the cage body 20, and are mounted over the pillar portions 22. The roller retainer 40 is constituted by a locking portion 41 that is locked on the outer surface of the pillar portion 22 and two clamping portions 42a, 42b that extend from the edges of the locking portion 41 toward the both inner side surfaces of the pillar portion 22, thereby the roller retainer 40 has a substantially U-shaped cross section. The clamping portions 42a, 42b elastically clamp the pillar portions 22 in a state that the clamping portions are convexly bent toward the pillar portions 22.

In the roller retainer 40 in a free state, the distance between the ends 42c, 42d of the clamping portions 42a, 42b is larger than the width of the pillar portion 22 and the distance between the peaks 42c, 42d is smaller than the width of the pillar portion 22. For this reason, mounting of the roller retainer 40 over the pillar the description thereof is omitted. Because the peaks 42c, 42d of the clamping portions 42a, 42b are pushed until both side surfaces of the pillar portion 22 and the distance between them at the position in which the peaks 42c, 42d of the clamping portion 42a, 42b are pushed becomes larger than that in free condition, they elastically clamp the side surfaces of the pillar portion 22. As a result, the roller retainers 40 are mounted and fixed over the pillar portions 22.

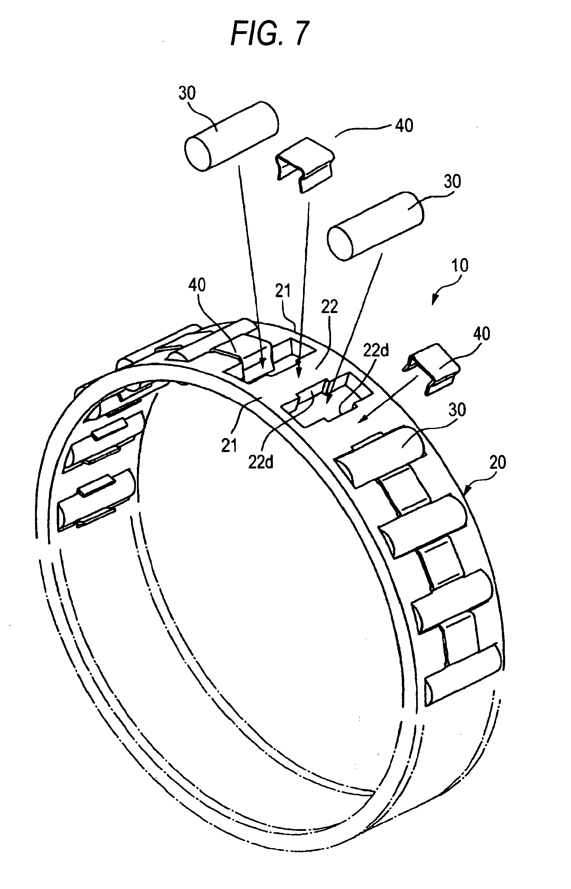

As described above, as for the roller retainer 40, as shown in FIG. 7, the clamping regions of the clamping portions 42a, 42b on both side surfaces of the pillar portion 22 may be parts of the side surfaces of the pillar portion 22 in the width direction, not entire side surfaces. When the clamping portions 42a, 42b partially clamp the side surfaces of the pillar portion 22 in the width direction, grooves 22d are formed on the side surfaces to guide the roller retainer 40, and in turn, the roller retainer 40 can be fitted in the guiding grooves 22d. The grooves 22d are formed at the middle of the side surfaces in the width direction of the pillar portions 22, so that the roller retainers 40 are located at the middle of the pillar portion 22 by the grooves 22d and effectively prevent the rollers 30 from falling out of the pockets.

The cage 10 for thrust roller bearings as described above also has the same effects as the cage for radial roller bearings, which is not described herein in detail to avoid repetition. The invention is applicable to a variety of cages, such as machined-typed cage, welding cage, resin cage, steel plate cage.

The invention may be modified within the scope described in the appended claims.

## Claims

1. A cage for a roller bearing comprising:
- a cage body (20) including pockets (23) for retaining rollers, the pocket (23) being formed by circumferentially adjacent pillar portions (22); and
- a plurality of roller retainers (40) that are separately formed from the cage body (20) and mounted over the pillar portions (22),
- wherein the roller retainer (40) includes a locking portion (41) that is locked on an outer surface of the pillar portion (22) and two clamping portions (42a, 42b) **characterized in that** the two clamping portions extend from opposite ends of the locking portion (41) toward inner side surfaces of the pillar portion (22), has a generally U-shaped cross section, and is mounted and fixed over the pillar portion (22) in a state that the clamping portions (42a, 42b) elastically clamp the inner side surfaces of the pillar portion (22),
- wherein the clamping portion (42a) includes a first bending portion (42a1) that is bent from the end of the locking portion (41) toward the pillar portion (22) and a second bending portion (42a2) that is bent back toward the pocket (23), or
- wherein the clamping portions (42a, 42b) are generally curved to be convex toward the pillar portions (22).

## Patentansprüche

1. Käfig für ein Rollenlager, umfassend:
- einen Käfigkörper (20) mit Taschen (23) zum Einbehalten von Rollen, wobei die Tasche (23) durch umfangsmäßig benachbarte Säulenbereiche (22) gebildet ist; und
- eine Mehrzahl von Rollenhaltern (40), die getrennt vom Käfigkörper (20) ausgebildet und über den Säulenbereichen (22) befestigt sind,
- wobei der Rollenhalter (40) einen Verriegelungsbereich (41) umfasst, der eine Außenfläche des Rollenbereichs (22) verriegelt, und zwei Klemmbereiche (42a, 42b) umfasst, **dadurch gekennzeichnet, dass** die zwei Klemmbereiche sich von entgegengesetzten Enden des Verriegelungsbereichs (41) in Richtung von inneren Seitenflächen des Säulenbereichs (22) erstrecken, der einen üblichen U-förmigen Querschnitt aufweist, und über dem Säulenbereich (22) in einem Zustand befestigt und fixiert ist, dass die Klemmbereiche (42a, 42b) die inneren Seitenflächen des Säulenbereichs (22) elastisch festklemmen,
- wobei der Klemmbereich (42a) einen ersten gebogenen Bereich (42a1), der vom Ende des Verriegelungsbereichs (41) in Richtung des Säulenbereichs (22) gebogen ist, und einen zweiten gebogenen Bereich (42a2), der in Richtung der Tasche (23) zurückgebogen ist, umfasst, oder
- wobei die Klemmbereiche (42a, 42b) üblicherweise konvex in Richtung der Säulenbereiche (22) gebogen sind.

## Revendications

1. Cage pour palier à rouleaux comprenant :
- un corps de cage (20) comportant des poches (23) destinées à retenir des rouleaux, la poche (23) étant formée par des parties en colonne circonférentiellement adjacentes (22) ; et
- une pluralité d'éléments de retenue de rouleau (40) qui sont formés de manière séparée du corps de cage (20) et montés au-dessus des parties en colonne (22),
- dans laquelle l'élément de retenue de rouleau (40) comporte une partie de verrouillage (41) qui est verrouillée sur une surface externe de la partie en colonne (22) et deux parties de blocage (42a, 42b) **caractérisée en ce que** les deux parties de blocage s'étendent à partir des extrémités opposées de la partie de verrouillage (41) vers les surfaces latérales internes de la partie en colonne (22), présente une section transversale sensiblement en forme de U, et est monté et fixé au-dessus de la partie en colonne (22) dans un état tel que les parties de blocage (42a, 42b) bloquent de manière élastique les surfaces latérales internes de la partie en colonne (22),
- dans laquelle la partie de blocage (42a) comporte une première partie courbe (42a1) qui est courbée à partir de l'extrémité de la partie de verrouillage (41) vers la partie en colonne (22) et une seconde partie courbe (42a2) qui est recourbée vers la poche (23), ou
- dans laquelle les parties de blocage (42a, 42b) sont courbées sensiblement de manière à être convexes vers les parties en colonne (22).
